(19) Europäisches Patentamt
European Patent Office
Office européen des brevets

(11) EP 1 798 403 A1

(12) DEMANDE DE BREVET EUROPEEN

(43) Date de publication:
**20.06.2007 Bulletin 2007/25**

(21) Numéro de dépôt: **06301208.2**

(22) Date de dépôt: **04.12.2006**

(51) Int Cl.:
***F02D 41/00*** *(2006.01)* ***F02D 41/18*** *(2006.01)*
***F02M 25/07*** *(2006.01)* *F02B 37/18* *(2006.01)*

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **13.12.2005 FR 0512624**

(71) Demandeur: **Renault SAS**
**92100 Boulogne Billancourt (FR)**

(72) Inventeurs:
- **Quetelart, Florent**
  **91760 Itteville (FR)**
- **Schmitt, Jean-Christophe**
  **91100 Corbeil Essonnes (FR)**
- **Turpin, Thomas**
  **91400 Orsay (FR)**

# (54) Procédé d'estimation de température de gaz d'échappement avant turbine

(57) Procédé d'estimation de la température des gaz d'échappement avant turbine (2) dans un moteur à combustion interne (1) doté d'un turbocompresseur (3). comprenant des opérations :
- de mesure de la quantité d'air frais $Q_{air}$ admis par le moteur ;
- d'estimation de la chaleur massique à pression constante de l'air frais admis par le moteur $Cp_{22}$ ;
- d'estimation ou de mesure d'une température de l'air frais admis T22 ;
- d'estimation de la chaleur massique à pression constante des gaz d'échappement $Cp_{31}$ amont du compresseur ;
- d'estimation d'une quantité d'énergie $h^+$ rapportée aux gaz d'échappement par la combustion d'une quantité de carburant $Q_{carb}$ dans la/les chambre (s) de combustion ;
- d'estimation de la température des gaz d'échappement à l'aide de ladite quantité d'air frais mesurée $Q_{air}$, de ladite température de l'air frais admis T22, desdites chaleurs massiques estimées $Cp_{22}$, $Cp_{31}$ et de ladite quantité d'énergie $h^+$.

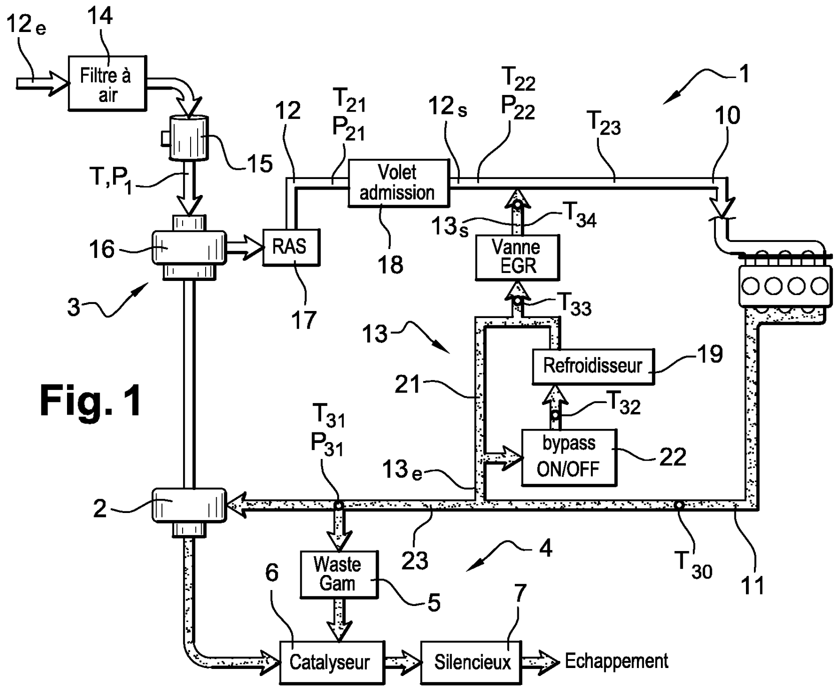

Fig. 1

EP 1 798 403 A1

## Description

La présente invention concerne, de façon générale, le domaine du contrôle moteur, de la détermination de données de fonctionnement du moteur et plus particulièrement des procédés d'estimation de données physiques du moteur.

Plus particulièrement, l'invention concerne un procédé d'estimation de la température des gaz d'échappement avant turbine dans un moteur à combustion interne doté d'un turbocompresseur.

Le contrôle moteur est la technique de gestion d'un moteur à combustion interne avec l'ensemble de ses capteurs et actionneurs. L'ensemble des lois de contrôle commande (stratégies logicielles) et des paramètres de caractérisation (calibrations) d'un moteur sont contenues dans un calculateur appelé par la suite UCE (unité de contrôle électronique). Dans la suite de la description de l'invention, nous allons nous limiter au cas du moteur à combustion interne suralimenté par turbocompresseur.

Le turbocompresseur est composé d'une turbine et d'un compresseur dans le but d'augmenter la quantité d'air frais admis dans les cylindres. La turbine est placée à la sortie du collecteur d'échappement et est entraînée par les gaz d'échappement. La puissance fournie par les gaz d'échappement à la turbine peut être modulée en installant une soupape de décharge ou des ailettes (turbo à géométrie variable : TGV). Le compresseur est monté sur le même axe que la turbine. Il comprime l'air qui entre dans le collecteur d'admission. Un échangeur peut être placé entre le compresseur et le collecteur d'admission pour refroidir l'air à la sortie du compresseur.

Un actionneur est utilisé pour piloter l'ouverture et la fermeture de la soupape de décharge ou des ailettes de turbine. Le signal de commande de l'actionneur est fourni par l'UCE et permet d'asservir la pression dans le collecteur d'admission. La consigne de pression collecteur est calculée par l'UCE. La pression collecteur est mesurée via un capteur de pression placé sur le collecteur d'admission. Le débit d'air est mesuré via un dispositif de mesure tel qu'un débitmètre.

Une bonne connaissance de la température de gaz d'échappement avant la turbine peut être nécessaire dans les systèmes de contrôles actuels, par exemple dans des stratégies de protection de la turbine, de gestion du post-traitement (par exemple filtre à particules, piège à oxydes d'azote NOx) ou dans des modèles de thermodynamiques à l'échappement.

C'est la raison pour laquelle de nombreux motoristes ont développé diverses solutions visant à déterminer la température des gaz d'échappement avant la turbine. Cette détermination peut se faire par l'installation d'un capteur de température à l'endroit de la conduite d'échappement. L'utilisation d'un capteur de température pose des inconvénients de coût, de risques de perturbations du signal de mesure, de mauvaise tenue du capteur à la thermique et à la composition des gaz brûlés, de mauvaise tenue mécanique, de perte de précision si la plage de mesure est trop importante et une dynamique lente. Il a donc été envisagé de déterminer cette température par une estimation à partir d'autres paramètres de fonctionnement du moteur.

Un procédé d'estimation de la température des gaz d'échappement avant turbine tel que précédemment défini, est par exemple décrit dans le document brevet US2004/0084030. Ce document présente une possibilité d'obtenir un procédé d'estimation de la température des gaz brûlés recirculés basé sur une modélisation des transferts thermiques au sein du refroidisseur des gaz brûlés recirculés.

Dans ce contexte, la présente invention a pour but de proposer un autre procédé d'estimation de la température des gaz d'échappement avant turbine permettant d'estimer la température des gaz d'échappement avant leur passage dans la turbine.

A cette fin, le procédé de l'invention, par ailleurs conforme à la définition générique qu'en donne le préambule défini précédemment, est essentiellement caractérisé en ce que le procédé comprend :

- une opération de mesure de la quantité d'air frais $Q_{air}$ admis par le moteur ;
- une opération d'estimation de la chaleur massique à pression constante de l'air frais admis par le moteur $Cp_{22}$;
- une opération d'estimation ou de mesure d'une température de l'air frais admis T22 ;
- une opération d'estimation de la chaleur massique à pression constante des gaz d'échappement rejetés $Cp_{31}$ par le moteur à l'endroit d'une conduite reliant au moins une chambre de combustion du moteur au compresseur ;
- une opération d'estimation d'une quantité d'énergie $h^+$ apportée aux gaz d'échappement par la combustion d'une quantité de carburant $Q_{carb}$ dans la/les chambres de combustion du moteur ;
- une opération d'estimation de la température des gaz d'échappement à l'aide de ladite quantité d'air frais mesurée $Q_{air'}$ de ladite température de l'air frais admis T22, desdites chaleurs massiques estimées $Cp_{22}$, $Cp_{31}$ et de ladite quantité d'énergie $\boldsymbol{h^+}$ estimée apportée aux gaz d'échappement par la combustion.

Grâce à ce procédé, il est possible d'augmenter la précision de l'estimation de la température des gaz d'échappement car on prend en compte l'apport énergétique fourni par le moteur durant son fonctionnement, cet apport provenant notamment de la combustion.

On peut par exemple faire en sorte que le procédé soit mis en oeuvre sur un moteur à combustion comportant un circuit de recirculation de gaz brûlés, ce circuit étant adapté pour collecter des gaz d'échappement du moteur et les apporter dans un collecteur d'admission de gaz du moteur et que le procédé comporte en outre une opération d'estimation de perte d'énergie des gaz brûlés recirculés $h^-$ et que la perte d'énergie $h^-$ ainsi estimée soit utilisée pour mettre en oeuvre l'opération d'estimation de la température des gaz d'échappement.

Ce mode de réalisation permet de prendre en compte dans le bilan énergétique du moteur les pertes d'énergie des gaz brûlés qui sont recirculés durant la recirculation. On augmente ainsi la qualité de l'estimation de la température des gaz d'échappement.

On peut également faire en sorte que le circuit de recirculation de gaz brûlés comporte un refroidisseur adapté pour refroidir des gaz brûlés transitant par le circuit de recirculation et que pour estimer la perte d'énergie des gaz brûlés recirculés, on mesure une température d'un fluide de refroidissement circulant au contact dudit refroidisseur, la température de ce fluide de refroidissement étant corrélée à la perte d'énergie des gaz brûlés recirculés $\boldsymbol{h^-}$.

On peut également faire en sorte que ledit circuit de recirculation de gaz brûlés comporte en outre une conduite de contournement du refroidisseur et une vanne de contournement adoptant sélectivement une configuration de refroidissement des gaz brûlés recirculés dans laquelle ces gaz recirculés passent par le refroidisseur et une configuration de non refroidissement des gaz brûlés recirculés dans laquelle ces gaz recirculés sont acheminés vers le collecteur d'admission sans passer par le refroidisseur, le procédé étant en outre caractérisé en ce que l'on estime la perte d'énergie $\boldsymbol{h^-}$ des gaz brûlés recirculés uniquement lorsque la vanne de contournement est en configuration de refroidissement des gaz brûlés recirculés.

Ce mode de réalisation permet de réduire l'erreur d'estimation de la température des gaz brûlés en réduisant au minimum le nombre de paramètres d'estimation. Ainsi, pour estimer la température des gaz d'échappement, on n'utilisera pas la perte d'énergie liée au circuit de recirculation lorsque les gaz brûlés contournent le refroidisseur.

On peut également faire en sorte que pour estimer la perte d'énergie $\boldsymbol{h^-}$ des gaz brûlés recirculés, on évalue la quantité $Q_{EGR}$ de gaz brûlés recirculés transitant par le circuit de recirculation (13) et par le collecteur d'admission (10) ainsi que la différence de température existant entre une ancienne valeur estimée de la température des gaz d'échappement et la température d'un fluide de refroidissement, cette ancienne valeur provenant par exemple d'une mesure d'une autre température du moteur réalisée à l'initialisation du processus ou lors d'une opération d'estimation de la température antérieure réalisée selon le procédé de l'invention à un moment (t-1).

Lorsque le moteur vient de démarrer à froid, l'ancienne valeur pourra être une valeur de température mesurée sur le moteur, cette valeur étant utilisée jusqu'à ce que le moteur atteigne une certaine température puis l'ancienne valeur sera une valeur de la température des gaz d'échappement estimée lors d'une itération passée du procédé. Ainsi, au fur et à mesure du fonctionnement du moteur, l'erreur entre la température réelle des gaz d'échappement et la température estimée par le procédé va en se réduisant.

On peut également faire en sorte que la quantité d'énergie apportée aux gaz d'échappement soit estimée en utilisant le pouvoir calorifique inférieur du carburant Pci et un paramètre de rendement thermique de combustion ke fonction notamment de la quantité de carburant admis $Q_{carb}$, du régime moteur N et d'une pression de gaz cette pression étant une pression d'admission de gaz $P_{22}$ dans le collecteur d'admission et/ou une pression de gaz d'échappement $P_{31}$.

On peut également faire en sorte que la température des gaz d'échappement $\boldsymbol{T_{31}}$ soit estimée à l'aide d'une formule comprenant au moins le membre suivant :

$$\frac{h^+ + h^- + Q_{air} \times Cp_{22} \times T_{22}}{Q_{air} \times Cp_{31}}$$

où

$h^+$ est la quantité d'énergie apportée aux gaz d'échappement par la combustion d'une quantité de carburant $Q_{carb}$ dans des chambres de combustion du moteur ,

$h^-$ est la quantité d'énergie perdue par les gaz brûlés recirculés ;

$Q_{air}$ est la quantité d'air frais mesurée ; T22 est la température estimée ou mesurée de l'air frais admis ;

$Cp_{22}$ est la chaleur massique à pression constante de l'air frais admis par le moteur

et $Cp_{31}$ est la chaleur massique à pression constante des gaz d'échappement rejetés par le moteur.

On peut également faire en sorte que la température des gaz d'échappement $T_{31}$ soit estimée à l'aide de la formule :

$$T_{31} = \frac{h^+ + h^- + Q_{air} \times Cp_{22} \times T_{22}}{Q_{air} \times Cp_{31}} \times f(P_{31}, P_{22})$$

où $f(P_{31},P_{22})$ est une fonction variable de la pression d'admission de gaz $P_{22}$ dans le collecteur d'admission (10) et /ou de la pression de gaz d'échappement $P_{31}$.

On peut également faire en sorte que la fonction variable $f(P_{31}, P_{22})$ soit définie par $f(P_{31}, P_{22}) = \frac{P_{31}}{P_{22}}$.

Alternativement, on peut faire en sorte que la fonction variable $f(P_{31},P_{22})$ comporte une partie variable de la forme $\frac{dP_{22}}{dt}$ cette partie variable étant la dérivée dt dans le temps de la pression d'admission de gaz $P_{22}$.

Chacun des modes de réalisations de l'invention présentés précédemment a pour objet d'affiner, seul ou en combinaisons avec d'autres modes de réalisations de l'invention, l'estimation de la température des gaz d'échappement.

D'autres caractéristiques et avantages de l'invention ressortiront clairement de la description qui en est faite ci-après, à titre indicatif et nullement limitatif, en référence aux dessins annexés, dans lesquels:

la figure 1 représente une vue schématique d'un premier moteur pour la mise en oeuvre de l'invention, ce moteur étant doté d'un circuit de déviation de gaz d'échappement ;
la figure 2 représente une vue schématique d'un second moteur pour la mise en oeuvre de l'invention, ce moteur étant doté d'une turbine de turbocompresseur à géométrie variable ;
la figure 3 représente un schéma logique d'un mode préférentiel de réalisation du procédé de l'invention.

Les abréviations utilisées pour la description de l'invention sont détaillées comme suit :

P1: Pression ambiante ;
P21 : Pression de suralimentation avant volet d'admission ;
P22 : Pression de suralimentation après volet d'admission aussi appelée pression d'admission de gaz dans le collecteur d'admission ;
P31: Pression avant la turbine aussi appelée pression de gaz d'échappement ;
T1 : Température air ambiant ;
T21 : Température de suralimentation avant volet d'admission ;
T22 : Température de suralimentation après volet d'admission aussi appelée température de l'air frais admis ;
T23 : Température dans le collecteur d'admission ;
T30 : Température dans le collecteur d'échappement ;
T31 : Température des gaz d'échappement avant la turbine, après prélèvement des gaz d'échappement par le circuit de recirculation de gaz brûlés ;
T32 : Température en entrée de l'échangeur EGR ;
T33 : Température en sortie de l'échangeur EGR ;
T34 : Température en sortie de la vanne EGR ; UCE : Unité de Commande Electronique

L'invention présentée porte sur un procédé d'estimation de la température avant la turbine T31 dans un moteur à combustion interne doté d'un turbocompresseur. Cette température est estimée dans une conduite de gaz d'échappement en amont de la turbine du turbocompresseur et en aval de la liaison entre cette conduite de gaz d'échappement et l'entrée du circuit de recirculation de gaz brûlés.

Les figures 1 et 2 présentent deux architectures de moteurs permettant la mise en oeuvre du procédé de l'invention.

Chacun des moteurs des figures 1 et 2 possède des chambres de combustion dans lesquelles coulissent des pistons, ces chambres sont reliées à un collecteur d'admission d'air 10 qui est lui même relié à la sortie 12s d'une conduite d'arrivée d'air frais 12 et à la sortie 13s d'un circuit de recirculation 13 de gaz brûlés collectés à l'échappement, c'est à dire collectés au niveau d'un collecteur d'échappement 11. L'air frais arrivant par la conduite 12 et les gaz brûlés arrivant par le circuit de recirculation 13 se mélangent à l'endroit de la jonction entre la sortie 13s du circuit de recirculation 13, et la sortie 12s de la conduite d'air frais 12, ce mélange pénétrant alors dans les chambres en transitant par le collecteur d'admission 10.

Le circuit de recirculation 13 comporte une entrée 13e reliée au collecteur de gaz d'échappement 11 et une sortie reliée au collecteur d'admission 10. Entre l'entrée 12e de la conduite d'arrivée d'air frais 12 et sa sortie 12s sont disposés en série sur la conduite 12, un filtre à air 14, un débitmètre 15, un compresseur 16 du turbocompresseur 3, un échangeur thermique d'admission 17 et un volet d'admission 18.

Le débitmètre 15 à pour fonction de permettre la mesure du débit massique d'air frais Qair transitant par la conduite d'arrivée d'air frais, ce flux d'air frais étant intégralement admis dans les chambres de combustion.

Le compresseur 16 a pour fonction d'augmenter la quantité d'air frais et donc d'oxygène pénétrant dans les chambres de combustion.

L'échangeur thermique d'admission 17 a quant à lui pour fonction de refroidir l'air frais transitant par la conduite d'admission.

Enfin le volet d'admission 18 qui est disposé en amont de la sortie 12s de la conduite d'air frais a pour fonction d'autoriser ou non le passage d'air frais vers le collecteur d'admission 10 et les chambres de combustion. Ce volet d'admission 18 est commandé en position par l'UCE qui reçoit également une information sur la position de ce volet d'admission 18.

Le circuit de recirculation 13 de gaz brûlés qui s'étend entre son entrée 13e reliée au collecteur d'échappement 11 et sa sortie 13s reliée au collecteur d'admission 10 comporte deux conduites parallèles et un système de vanne(s) de contournement 22 disposée pour alimenter sélectivement l'une ou l'autre de ces conduites en gaz brûlés. Sur une de ces conduites est disposé un refroidisseur 19 tel qu'un refroidisseur à eau pour le refroidissement des gaz brûlés recirculés. L'autre conduite, dite conduite de contournement 21, permet de faire passer directement les gaz brûlés recirculés vers le collecteur d'admission sans passer par le refroidisseur 19.

Les moteurs des figures 1 et 2 sont identiques entre eux sauf en ce qui concerne, d'une part la turbine 2 du turbocompresseur qui est à géométrie fixe sur la figure 1 et qui est à géométrie variable sur la figure 2 et d'autre part la structure de l'échappement des gaz de combustion.

Le moteur de la figure 1 comporte un circuit de déviation de gaz d'échappement 4. Ce circuit de déviation 4 de gaz d'échappement est adapté pour soit orienter tout ou partie des gaz d'échappement vers la turbine 2 du turbocompresseur 3, soit orienter tout ou partie de ces gaz d'échappement en aval de la turbine 2, sans les faire transiter par la turbine 2. Le circuit de déviation 4 comprend une conduite montée en parallèle de la conduite d'alimentation de la turbine, cette conduite de déviation est obturée sélectivement par une vanne d'obturation 5. Si cette vanne 5 est ouverte alors une partie des gaz d'échappement est déviée et ne passe pas par la turbine 2.

La conduite de sortie de gaz de la turbine et la conduite de déviation des gaz d'échappement sont reliées en série à un catalyseur 6, ce catalyseur étant lui même relié au silencieux 7.

Le moteur de la figure 2 quant à lui ne comporte pas de circuit de déviation de gaz d'échappement et l'intégralité des gaz d'échappement évacués du moteur est conduit vers la turbine 2 qui est à géométrie variable. La sortie de la turbine est ici reliée à un pré catalyseur 8 dont la sortie est reliée à un filtre à particules catalytique 9, ce dernier filtre à particules ayant lui même une sortie de gaz reliée au silencieux 7.

La quantité d'énergie prélevée par la turbine 2 du turbocompresseur dans le flux de gaz d'échappement dépend donc soit de la position des ailettes de la turbine 2 par rapport au flux de gaz d'échappement (dans le cas de la figure 2 avec une turbine à géométrie variable) soit de la quantité de gaz qui est effectivement conduite vers la turbine 2 et non déviée par le circuit de déviation 4 de gaz d'échappement (dans le cas de la figure 1).

La figure 3 décrit un mode de réalisation préférentiel du procédé de l'invention permettant d'obtenir une estimation de la température des gaz d'échappement avant la turbine 2.

Ce procédé se déroule par une succession d'opérations qui se reproduit de façon récurrente sous la forme d'une boucle, chaque 20 ms par exemple, pour régulièrement fournir une valeur estimée de la température des gaz d'échappement avant la turbine.

Le diagramme de la figure 3 qui représente le procédé de l'invention se déroule en partant de l'étape dite « début » jusqu'à l'étape dite « fin ». Lorsque le calculateur arrive à la fin de ce diagramme, une valeur courante de la température des gaz d'échappement T31 a été estimée et mémorisée. Le procédé est alors réitéré en repartant à l'étape dite « début ».

**Etape A :** Cette première étape du procédé est immédiatement successive de l'étape dite « début ». Dans cette étape A, on teste si un volet d'admission est présent et/ou si un capteur de pression après ce volet $P_{22}$ est présent. Dans le cas où il n' y a pas de volet à l'admission (c'est à dire lorsque la conduite d'arrivée d'air est complètement ouverte) ou que le capteur de $P_{22}$ est présent, l'étape B est effectuée. Sinon c'est l'étape C qui est effectuée. En d'autres termes le passage de l'étape A à l'étape B se produit lorsque l'on peut obtenir une mesure de la pression $P_{22}$ de l'air après le volet d'admission par un capteur également noté P22. Si l'invention est mise en oeuvre sur un moteur ne comportant pas de capteur de pression après volet $P_{22}$ , cette pression $P_{22}$ est alors toujours estimée.

**Etape B** : Cette étape B se déroule si le capteur de la pression $P_{22}$ est détecté présent à l'étape A ou si le volet d'admission est détecté présent. Cette étape B consiste à mesurer la pression P22 courante à l'aide d'un capteur. Une fois cette étape effectuée, le procédé se poursuit à l'étape E.

**Etape C :** cette étape est mise en oeuvre si à l'étape A on a détecté que le capteur $P_{22}$ n'est pas présent et si on a détecté que le volet à l'admission est présent. Durant cette étape C, on mesure la pression $P_{21}$ puis on passe à l'étape D pour permettre l'estimation de la pression $P_{22}$ à l'aide de la pression $P_{21}$ mesurée à l'étape C.

**Etape D** : A cette étape, la pression $P_{22}$ est estimée à partir de la pression $P_{21}$ à l'aide d'une formule connue au choix de détente des gaz isenthalpique tel que le Barré de St Venant ou isentropique. Une fois cette étape D mise en oeuvre on réalise alors l'étape E.

**Etape E :** Cette étape est effectuée immédiatement après les étapes B ou D et consiste à mesurer la température T22 et le débit d'air frais massique $Q_{air}$ (mg/cp) à l'aide de capteurs. Une fois cette étape mise en oeuvre, on passe directement à l'étape F.

**Etape F :** Cette étape consiste à calculer le débit de remplissage du moteur en utilisant par exemple la formule :

$$Q_{remplissage} = \frac{Vcyl}{4} \times \frac{N}{30} \times \rho_{air} \times \eta_{remplissage}(N, \rho_{air})$$

avec : $Q_{remplissage}$ = débit massique de remplissage (mg/cp);

Vcyl = cylindrée du moteur (L) ;

N = régime du moteur (tours/min) ; $\rho_{air} = \frac{P_{22}}{r \times T_{22}}$ = densité de l'air (kg/m$^3$), avec r=constante des gaz parfaits pour l'air ;

$\lambda_{remplissage}$ = rendement remplissage.

Alternativement à la formule précédente, étant donné que le rendement de remplissage est sensible à la pression atmosphérique et à la contre-pression à l'échappement, on peut mettre en oeuvre l'étape F en utilisant la formule ci-dessous. Cette formule alternative permet d'améliorer la précision du calcul du rendement remplissage.

$$Q_{remplissage} = \frac{Vcyl}{4} \times \frac{N}{30} \times \rho_{air} \times \eta_{remplissage}(N, \rho_{air}) \times \eta_{alti}(\alpha 1, \alpha 2) \times \eta_{CPE}(\beta 1, \beta 2)$$

avec :

$\eta_{alti}$ = correction du remplissage due aux variations de pression atmosphérique ;

$\eta_{CPE}$ = correction du remplissage due à la variation de la contre-pression à l'échappement ;

$\alpha 1$, $\alpha 2$ : paramètres de dépendance de $\eta_{alti}$, pouvant par exemple être $P_1$ et $P_{22}$ ;

$\beta 1$, $\beta 2$ : paramètres de dépendance de $\eta_{CPE}$, pouvant par exemple être $P_{31}$ et $P_{22}$.

**Etape G :** immédiatement après l'étape F, on met en oeuvre l'étape G qui consiste à calculer le débit massique d'EGR (gaz d'échappement recirculé) $Q_{EGR}$ à l'aide de la formule :

$$Q_{EGR} = Q_{remplissage} - Q_{air}$$

**Etape H :** Cette étape H est mise en oeuvre immédiatement après l'étape G et consiste à calculer le taux d'EGR à l'aide de la formule :

$$\tau_{EGR} = \frac{Q_{EGR}}{Q_{remplissage}}$$

avec :

$Q_{EGR}$= débit massique des gaz d'échappement recirculés (mg/cp)

**Etape I :** Cette étape I est mise en oeuvre immédiatement après l'étape H et consiste à calculer la richesse avec la formule suivante :

$$Ri = Ks \times \frac{Q_{carb}}{Q_{air}}$$

avec :

$Q_{air}$= débit d'air frais massique (mg/cp) ;
$Q_{carb}$= débit de carburant massique (mg/cp).

Si une sonde de richesse proportionnelle est présente, le calcul de la richesse peut être avantageusement remplacé par la mesure de richesse donnée par la sonde.
**Etape J :** Cette étape J est mise en oeuvre immédiatement après l'étape I et consiste à déterminer les chaleurs massiques des gaz à pression constante $Cp_{31}$ et $Cp_{22}$.

- $Cp_{22}$ est interpolé dans une table en fonction de la température $T_{22}$
- $Cp_{31}$ est interpolé :

- dans une table en fonction de la température $T_{31}$ (au pas de calcul précédent) en l'absence d'injection de carburant
- dans une cartographie en fonction de la température $T_{31}$ (au pas de calcul précédent) et de la richesse Ri en présence d'injection de carburant.

**Etape K :** Cette étape K est mise en oeuvre immédiatement après l'étape J et consiste à tester si la vanne de contournement 22 du refroidisseur 19 des gaz recirculés est active, c'est-à-dire si les gaz brûlés recirculés ne transitent pas par le refroidisseur. Si les gaz d'échappement recirculés ne transitent pas par le refroidisseur 19 alors on met directement en oeuvre l'étape N, sinon on met directement en oeuvre l'étape L.
**Etape L :** Cette étape L est mise en oeuvre immédiatement après l'étape K si des gaz brûlés recirculés transitent par le refroidisseur 19. Cette étape consiste à mesurer la température de l'eau $T_{eau}$ du circuit de refroidissement du moteur.
**Etape M :** Cette étape M est mise en oeuvre immédiatement après l'étape L et consiste à calculer les pertes d'énergie de l'écoulement des gaz d'échappement recirculés selon, par exemple, la formule suivante :

$$h^{-} = -Q_{EGR} \times Cp_{31} \times \varepsilon \times (T_{31}(t-1) - T_{eau})$$

avec :

ε = efficacité du refroidisseur des gaz d'échappement recirculés. Cette efficacité peut dépendre d'un ou plusieurs paramètres moteurs tel que, par exemple, le débit massique d'EGR.

**Etape N :** Cette étape N est mise en oeuvre immédiatement après l'étape M ou alternativement immédiatement après l'étape K et consiste à calculer les gains d'énergie ayant lieu dans les cylindres lors de la combustion.
Ces gains sont de deux types : un premier terme dû à la combustion et un second terme correspondant aux échanges énergétiques dans le moteur.
Le premier terme peut s'écrire :

$$h_1^{+} = \sum (k_e P_{ci} Q_{carb})$$

où la somme est constituée d'autant de termes qu'il y a d'injections par cylindre et par cycle
avec :

Pci signifiant pouvoir calorifique inférieur du carburant.
ke = rendement thermique de combustion, fonction de plusieurs paramètres moteurs pouvant être, par exemple, choisis parmi le régime N du moteur, la quantité de carburant admis/injectée $Q_{carb}$, le taux d'EGR, la température des gaz dans les cylindres, la pression admission ou la pression échappement.

Le second terme $h_2^{+}$ est constitué par une évaluation des échanges thermiques au niveau des parois des chambres de combustion ainsi que par une estimation du travail mécanique reçu par les pistons.
Ce second terme peut s'écrire :

$$h_2^+ = \sum(h_{eau}(\gamma_1,\gamma_2)) + \sum(h_{carb}(\delta_1,\delta_2)) + \sum(h_{méca}(\lambda_1,\lambda_2))$$

où les sommes des différents termes sont constituées d'autant d'éléments qu'il y a d'injections par cylindre et par cycle avec :

**$h_{eau}$ + $h_{carb}$:** échange thermique entre le gaz emprisonné dans le cylindre et les parois du cylindre. Cette grandeur physique est modélisée par exemple par un échange fictif entre les gaz et une paroi à la température du liquide de refroidissement ($h_{eau}$) et par un échange fictif entre les gaz et une paroi à une température traduisant l'historique de la quantité d'énergie délivrée par la combustion ($h_{carb}$).

**$h_{méca}$ :** échange de travail mécanique entre les gaz et les pistons.

**$\gamma_1$, $\gamma_2$ :** paramètres de dépendance de $h_{eau}$, pouvant par exemple être la température de l'eau de refroidissement du moteur $T_{eau}$ et N le régime du moteur

**$\delta_1$, $\delta_2$** : paramètres de dépendance de $h_{carb}$, pouvant par exemple être N et une grandeur traduisant l'historique de la quantité d'énergie délivrée par la combustion. Cette grandeur peut par exemple être modélisée par un filtre de 1er ordre modulant le $Q_{carb}$.

**$\lambda_1$, $\lambda_2$:** paramètres de dépendance de $h_{eau}$, pouvant par exemple être le régime N et la quantité de carburant $Q_{carb}$

Au final on calcul la quantité d'énergie apportée aux gaz d'échappement en utilisant la formule :

$$h^+ = h_1^+ - h_2^+$$

**Etape O** : Cette étape O est mise en oeuvre immédiatement après l'étape N et consiste à estimer la température des gaz d'échappement avant la turbine $T_{31}$, selon la formule suivante :

$$T_{31} = \frac{h^+ + h^- + Q_{air} \times Cp_{22} \times T_{22}}{Q_{air} \times Cp_{31}} \times f(P_{31}, P_{22})$$

Le correctif $f(P_{31},P_{22})$ permet de prendre en compte l'impact de la différence de pression entre l'admission et l'échappement sur le bilan énergétique. Préférentiellement, on peut prendre $f(P_{31}, P_{22}) = \frac{P_{31}}{P_{22}}$ ou dans le cas contraire, on peut utiliser pour calculer $f(P_{31}, P_{22})$ une corrélation avec $\frac{dP_{22}}{dt}$.

## Revendications

1. Procédé d'estimation de la température des gaz d'échappement (T31) avant turbine (2) dans un moteur à combustion interne (1) doté d'un turbocompresseur (3), **caractérisé en ce que** le procédé comprend :

   - une opération (E) de mesure de la quantité d'air frais $Q_{air}$ admis par le moteur ;
   - une opération (J) d'estimation de la chaleur massique à pression constante de l'air frais admis par le moteur $Cp_{22}$ ;
   - une opération (E) d'estimation ou mesure d'une température de l'air frais admis T22 ;
   - une opération (J) d'estimation de la chaleur massique à pression constante des gaz d'échappement rejetés $Cp_{31}$ par le moteur à l'endroit d'une conduite reliant au moins une chambre de combustion du moteur au compresseur ;
   - une opération (N) d'estimation d'une quantité d'énergie $h^+$ apportée aux gaz d'échappement par la combustion d'une quantité de carburant $Q_{carb}$ dans la/les chambres de combustion du moteur ;

- une opération (O) d'estimation de la température des gaz d'échappement (T31) à l'aide de ladite quantité d'air frais mesurée $Q_{air}$, de ladite température de l'air frais admis T22, desdites chaleurs massiques estimées $Cp_{22}$, $Cp_{31}$ et de ladite quantité d'énergie $h^+$ estimée apportée aux gaz d'échappement par la combustion.

**2.** Procédé selon la revendication 1, **caractérisé en ce qu'**il est mis en oeuvre sur un moteur à combustion comportant un circuit de recirculation de gaz brûlés, ce circuit étant adapté pour collecter des gaz d'échappement du moteur et les apporter dans un collecteur d'admission (10) de gaz du moteur (1) et **en ce que** le procédé comporte en outre une opération d'estimation de perte d'énergie des gaz brûlés recirculés $h^-$ et **en ce que** la perte d'énergie $h^-$ ainsi estimée est utilisée pour mettre en oeuvre l'opération d'estimation de la température des gaz d'échappement.

**3.** Procédé selon la revendication 2, **caractérisé en ce que** ledit circuit de recirculation de gaz brûlés comporte un refroidisseur (19) adapté pour refroidir des gaz brûlés transitant par le circuit de recirculation et **en ce que** pour estimer la perte d'énergie des gaz brûlés recirculés on mesure une température ($T_{eau}$) d'un fluide de refroidissement circulant au contact dudit refroidisseur, la température de ce fluide de refroidissement étant corrélée à la perte d'énergie des gaz brûlés recirculés $h^-$.

**4.** Procédé selon la revendication 3, **caractérisé en ce que** ledit circuit de recirculation de gaz brûlés comporte en outre une conduite de contournement (21) du refroidisseur et une vanne de contournement (22) adoptant sélectivement une configuration de refroidissement des gaz brûlés recirculés dans laquelle ces gaz recirculés passent par le refroidisseur (19) et une configuration de non refroidissement des gaz brûlés recirculés dans laquelle ces gaz recirculés sont acheminés vers le collecteur d'admission (10) sans passer par le refroidisseur (19), le procédé étant en outre **caractérisé en ce que** l'on estime la perte d'énergie $h^-$ des gaz brûlés recirculés uniquement lorsque la vanne de contournement (22) est en configuration de refroidissement des gaz brûlés recirculés.

**5.** Procédé selon l'une quelconque des revendications 3 ou 4, combinée à la revendication 2, **caractérisé en ce que** pour estimer la perte d'énergie $h^-$ des gaz brûlés recirculés, on évalue la quantité $Q_{EGR}$ de gaz brûlés recirculés transitant par le circuit de recirculation (13) et par le collecteur d'admission (10) ainsi que la différence de température existant entre ladite température de fluide de refroidissement mesurée et une ancienne valeur estimée de la température des gaz d'échappement, cette ancienne valeur provenant par exemple d'une mesure d'une autre température du moteur réalisée à l'initialisation du processus ou lors d'une opération d'estimation de la température antérieure réalisée selon le procédé de l'invention à un moment *(t-1)* .

**6.** Procédé selon l'une quelconque des revendications 2 à 5, **caractérisé en ce que** la quantité d'énergie apportée aux gaz d'échappement est estimée en utilisant le pouvoir calorifique inférieur du carburant Pci et un paramètre de rendement thermique de combustion ke fonction notamment de la quantité de carburant admis $Q_{carb}$, du régime moteur N et d'une pression de gaz cette pression étant une pression d'admission de gaz $P_{22}$ dans le collecteur d'admission (10) et/ou une pression de gaz d'échappement $P_{31}$.

**7.** Procédé selon l'une quelconque des revendications 2 à 6, **caractérisé en ce que**
La température des gaz d'échappement $T_{31}$ est estimée à l'aide d'une formule comprenant au moins le membre suivant :

$$\frac{h^+ + h^- + Q_{air} \times Cp_{22} \times T_{22}}{Q_{air} \times Cp_{31}}$$

où
$h^+$ est la quantité d'énergie apportée aux gaz d'échappement par la combustion d'une quantité de carburant $Q_{carb}$ dans des chambres de combustion du moteur ,
$h^-$ est la quantité d'énergie perdue par les gaz brûlés recirculés ;
$Q_{air}$ est la quantité d'air frais mesurée ;
T22 est la température estimée de l'air frais admis ;
$Cp_{22}$ est la chaleur massique à pression constante de l'air frais admis par le moteur
et $Cp_{31}$ est la chaleur massique à pression constante des gaz d'échappement rejetés par le moteur.

**8.** Procédé selon la revendication 7, **caractérisé en ce que** la température des gaz d'échappement $T_{31}$ est estimée à l'aide de la formule :

$$T_{31} = \frac{h^{+} + h^{-} + Q_{air} \times Cp_{22} \times T_{22}}{Q_{air} \times Cp_{31}} \times f(P_{31}, P_{22})$$

où $f(P_{31},P_{22})$ est une fonction variable de la pression d'admission de gaz $P_{22}$ dans le collecteur d'admission (10) et /ou de la pression de gaz d'échappement $P_{31}$.

**9.** Procédé selon la revendication 8, **caractérisé en ce que** la fonction variable $f(P_{31}, P_{22})$ est définie par $f(P_{31}, P_{22}) = \frac{P_{31}}{P_{22}}$.

**10.** Procédé selon la revendication 8, **caractérisé en ce que** la fonction variable $f(P_{31},P_{22})$ comporte une partie variable de la forme $\frac{dP_{22}}{dt}$ cette partie variable étant la dérivée dans le temps de la pression d'admission de gaz $P_{22}$.

**11.** Procédé selon l'une quelconque des revendications 1 à 10,**caractérisé en ce que** pour estimer ladite quantité d'énergie h+ apportée aux gaz d'échappement par la combustion, on évalue des échanges thermiques ayant lieu au niveau de parois de chambres de combustion et on estime un travail mécanique reçu par des pistons du moteur.

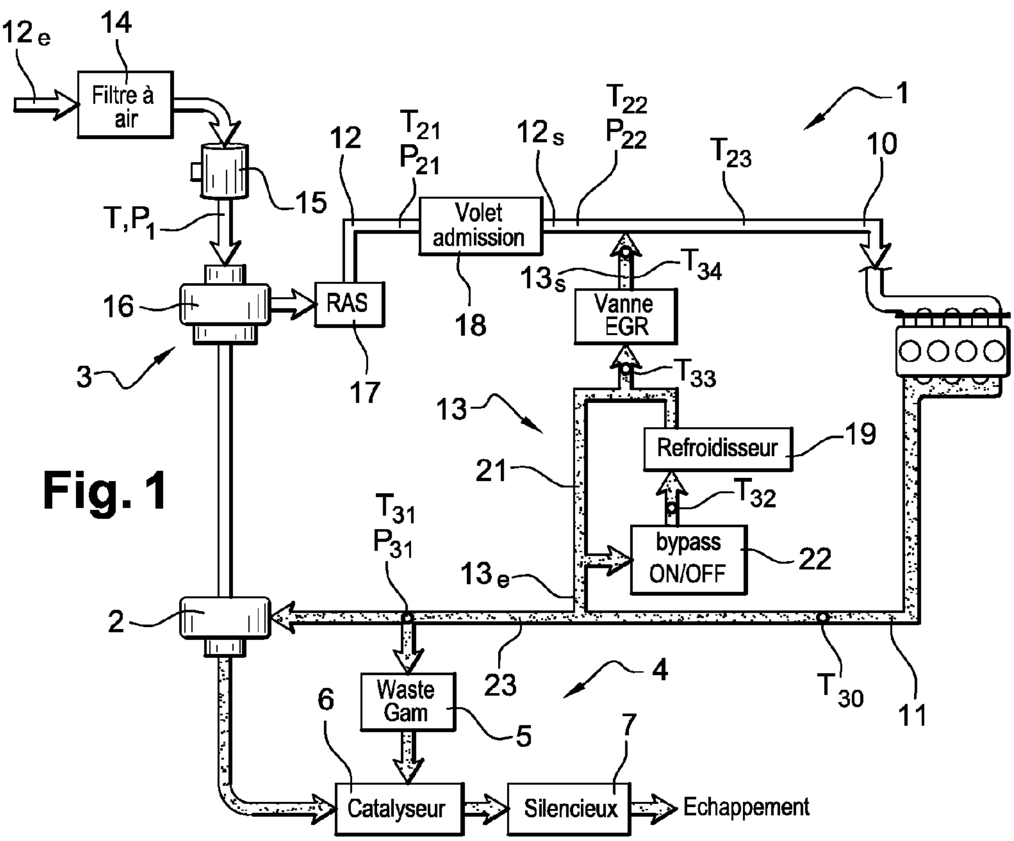
12e
14
Filtre à air
15
T,P1
16
3
RAS
17
12
T21
P21
Volet admission
18
12s
T22
P22
T23
1
10
13s
T34
Vanne EGR
T33
13
19
Refroidisseur
21
T32
bypass ON/OFF
22
T31
P31
13e
2
23
4
T30
11
Waste Gam
5
6
7
Catalyseur
Silencieux
Echappement

Fig. 1

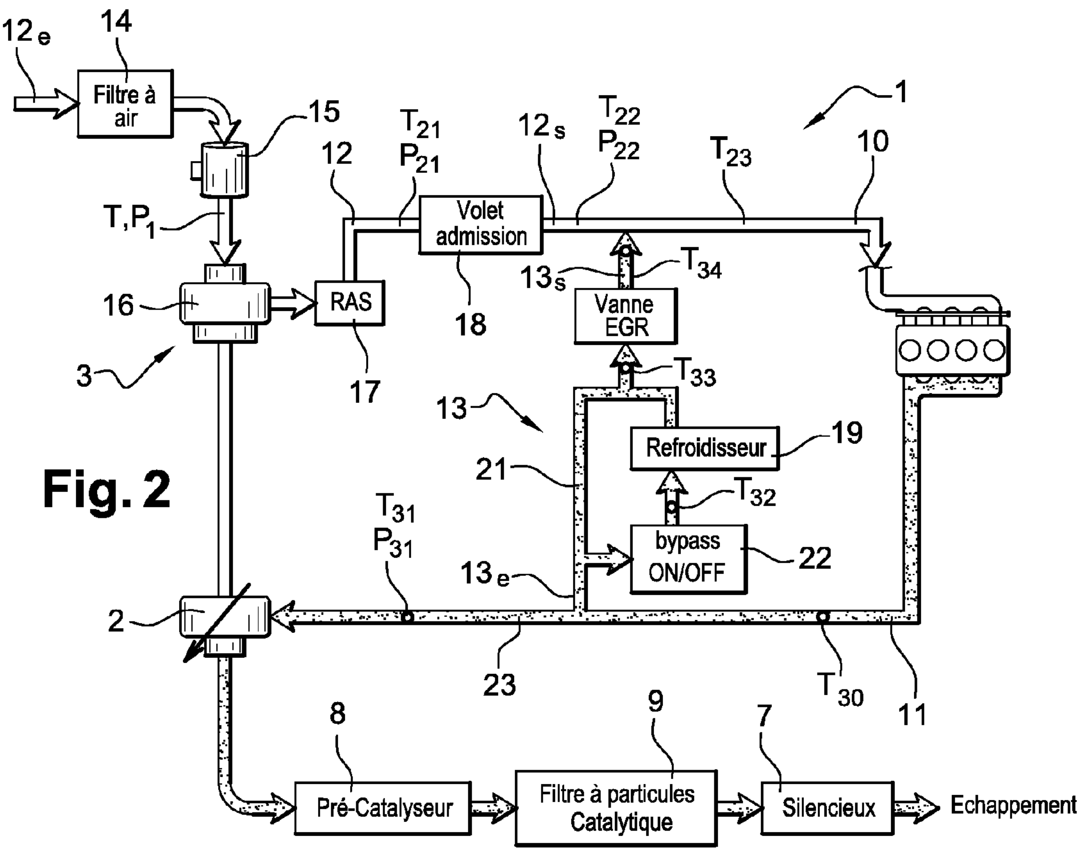
12e
14
Filtre à air
15
T,P1
16
3
RAS
17
12
T21
P21
Volet admission
18
12s
T22
P22
T23
1
10
13s
T34
Vanne EGR
T33
13
19
Refroidisseur
21
T32
bypass ON/OFF
22
T31
P31
13e
2
23
T30
11
8
9
7
Pré-Catalyseur
Filtre à particules Catalytique
Silencieux
Echappement

Fig. 2

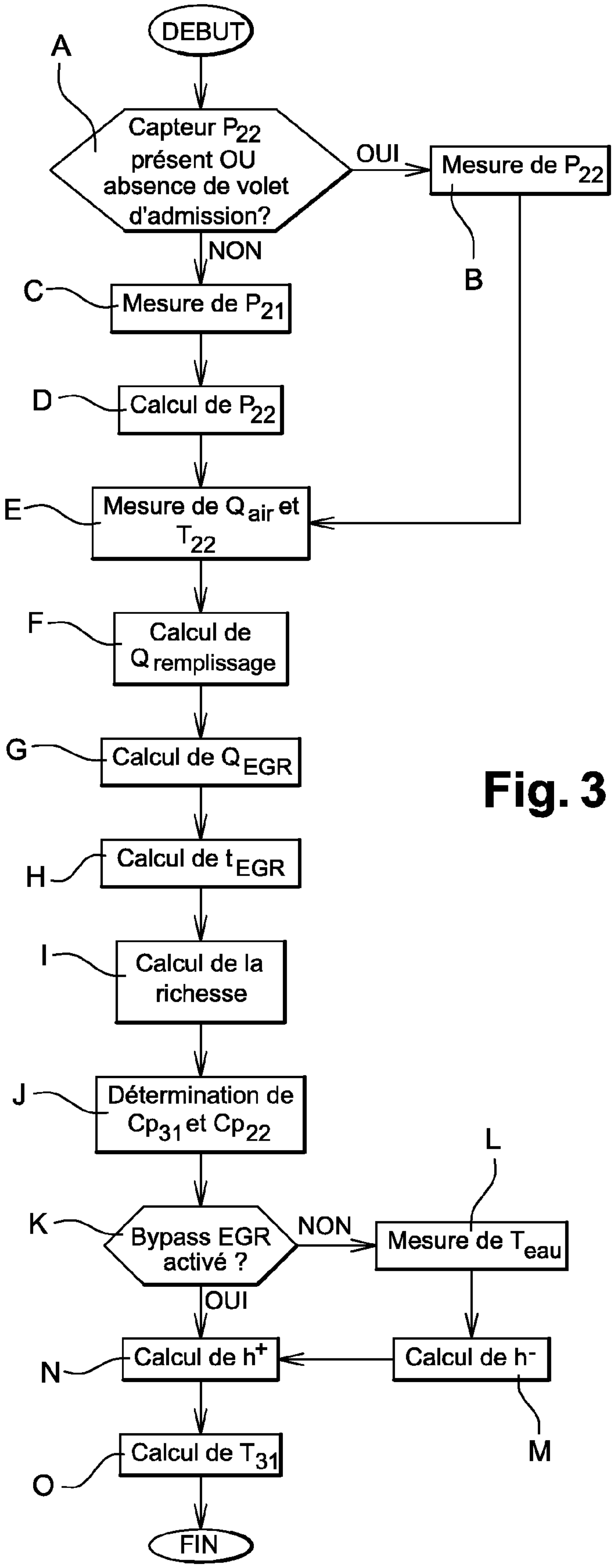
DEBUT
A
Capteur P22 présent OU absence de volet d'admission?
OUI
Mesure de P22
B
NON
C
Mesure de P21
D
Calcul de P22
E
Mesure de Qair et T22
F
Calcul de Qremplissage
G
Calcul de QEGR
H
Calcul de tEGR
I
Calcul de la richesse
J
Détermination de Cp31 et Cp22
L
K
Bypass EGR activé ?
NON
Mesure de Teau
OUI
N
Calcul de h+
Calcul de h-
M
O
Calcul de T31
FIN

Fig. 3

Office européen des brevets

# RAPPORT DE RECHERCHE EUROPEENNE

Numéro de la demande
EP 06 30 1208

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 03/046356 A (VOLKSWAGEN AKTIENGESELLSCHAFT; NITZKE, HANS-GEORG; REBOHL, THORSTEN; J) 5 juin 2003 (2003-06-05) * page 28, ligne 4 - page 30, ligne 11; figure 1 * | 1-4,6,7, 11 | INV. F02D41/00 F02D41/18 F02M25/07 ADD. F02B37/18 |
| Y | US 5 617 726 A (SHERIDAN ET AL) 8 avril 1997 (1997-04-08) * colonne 3, ligne 24 - colonne 4, ligne 8 * | 1-4,6,7, 11 | |
| A | US 6 550 464 B1 (BRACKNEY LARRY J) 22 avril 2003 (2003-04-22) * colonne 3, ligne 10 - colonne 7, ligne 35 * | | |
| A | US 6 715 287 B1 (ENGEL GERHARD ET AL) 6 avril 2004 (2004-04-06) * colonne 9, ligne 14 - ligne 56 * | 1 | |

DOMAINES TECHNIQUES RECHERCHES (IPC)

F02D
F02M

Le présent rapport a été établi pour toutes les revendications

| Lieu de la recherche | Date d'achèvement de la recherche | Examinateur |
|---|---|---|
| Munich | 27 mars 2007 | Pileri, Pierluigi |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

2

**ANNEXE AU RAPPORT DE RECHERCHE EUROPEENNE RELATIF A LA DEMANDE DE BREVET EUROPEEN NO.** EP 06 30 1208

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2007

| Document brevet cité au rapport de recherche | | Date de publication | Membre(s) de la famille de brevet(s) | | Date de publication |
|---|---|---|---|---|---|
| WO 03046356 | A | 05-06-2003 | EP | 1507967 A2 | 23-02-2005 |
| | | | US | 2007012040 A1 | 18-01-2007 |
| US 5617726 | A | 08-04-1997 | DE | 19680305 C2 | 07-01-1999 |
| | | | DE | 19680305 T0 | 24-07-1997 |
| | | | GB | 2303177 A | 12-02-1997 |
| | | | JP | 3085982 B2 | 11-09-2000 |
| | | | JP | 9508691 T | 02-09-1997 |
| | | | WO | 9630635 A1 | 03-10-1996 |
| US 6550464 | B1 | 22-04-2003 | AUCUN | | |
| US 6715287 | B1 | 06-04-2004 | WO | 0148363 A1 | 05-07-2001 |
| | | | DE | 19963358 A1 | 12-07-2001 |
| | | | EP | 1247016 A1 | 09-10-2002 |
| | | | ES | 2240169 T3 | 16-10-2005 |
| | | | JP | 2003518581 T | 10-06-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040084030 A